# EUROPEAN PATENT SPECIFICATION

(11) **EP 4 261 176 B1**
(45) Date of publication and mention of the grant of the patent: **02.07.2025**
(21) Application number: 22808574.2
(22) Date of filing: 29.04.2022
(51) Int. Cl.: B66C 23/693, B66C 23/70

(54) **SINGLE-CYLINDER MULTI-SECTION BOOM TELESCOPIC MECHANISM, BOOM AND CRANE**
TELESKOPMECHANISMUS FÜR EINEN EINZYLINDER-AUSLEGER, AUSLEGER UND KRAN MIT MEHREREN ABSCHNITTEN
MÉCANISME TÉLESCOPIQUE DE FLÈCHE À SECTIONS MULTIPLES MONOCYLINDRIQUE, FLÈCHE ET GRUE

(30) Priority: 22.02.2022 CN 202210163991
(43) Date of publication of application: 18.10.2023
(73) Proprietor: Sany Mobile Cranes Co., Ltd., Changsha, Hunan 410000 (CN)
(72) Inventor: LI, Peng ju, Changsha, Hunan 410000 (CN); ZHOU, Bin, Changsha, Hunan 410000 (CN); HU, Dingfeng, Changsha, Hunan 410000 (CN)
(74) Representative: Murgitroyd & Company
(86) International application number: PCT/CN2022/090360
(87) International publication number: WO 2023/159752

(56) References cited:
- CN-A- 113 086 869
- CN-A- 113 086 870
- CN-U- 201 694 761
- CN-U- 202 080 842
- CN-U- 206 751 235
- CN-Y- 201 433 061
- JP-A- 2009 161 271
- JP-A- 2020 152 490

## Description

### TECHNICAL FIELD

The present invention relates to the mechanical engineering technical field, and specifically to a telescopic device with single cylinder and multiple section arms, a crane arm and a crane.

### BACKGROUND OF THE INVENTION

Currently there are mainly two types of arm body telescopic devices used for vehicle cranes. According to the first type, several external or internal telescopic oil cylinders are provided outside or inside the arm body to push the telescopic arm body to move. Such device is relatively suitable for folding arm lorry cranes, but is not suitable for large-tonnage straight-arm lorry cranes having a telescopic arm with more than three sections due to mounting space, arm body length, self weight or other limiting reasons. According to the second type, two or three internal telescopic oil cylinders and a rope arranging mechanism are provided to drive several arm bodies to extend or retract in the following sequence: the first section extends first or the first and second sections of the arm body extend in sequence first, and then the subsequent sections of the arm body extend or retract synchronously. Such telescopic arm needs two or three internal telescopic oil cylinders, thus resulting in a larger section size of the jib arm body, a complicated internal structure, a large self weight of the jib assembly, fast attenuation for the loading ability of the crane, and a high cost. The telescopic arm body can extend or retract only in sequence during operation and it is difficult for a plurality of section arms to extend or retract synchronously, causing low operation efficiency of craning operation of the vehicle crane, a high cost due to multiple oil cylinders, and a high risk for leakage.

CN 201433061Y discloses a telescopic device with a single cylinder and multiple section arms according to the preamble of claim 1.

CN 206751235U a telescopic mechanism having five arms, including first section arm, second festival arm, third festival arm, fourth festival arm, pentamer arm, flexible hydro -cylinder and a wire rope, first pulley, the 2nd wire rope, second pulley, the 3rd wire rope, third pulley, fourth wire rope, fourth pulley, the 5th wire rope, the 5th pulley, the 6th wire rope, the 6th pulley, first section arm is connected with fixed external device, first section arm, second festival arm, third festival arm, fourth festival arm and pentamer arm are the box structure, and together nested in proper order, flexible hydro -cylinder embeds in the cavity, the piston rod of flexible hydro -cylinder is connected with first section arm, the cylinder of flexible hydro -cylinder is connected with second festival arm.

### SUMMARY OF THE INVENTION

The present invention aims to solve at least one of the above technical problems.

**In** order to achieve the above purpose, the technical solution of the present invention is set forth as follows.

A telescopic device with single cylinder and multiple section arms comprises: a third extension rope, a third retraction rope, a telescopic mechanism, a first section arm, as well as a second section arm and a third section arm which are nested in sequence within the first section arm, the telescopic mechanism has a fixed end connected with the first section arm and a movable end provided with a first turning structure, the second section arm is connected with the movable end of the telescopic mechanism and is further provided with a second turning structure, the third extension rope has one end connected with the first section arm and the other end connected with the third section arm after passing around a top portion of the first turning structure, the third retraction rope has one end connected with the first section arm and the other end connected with the third section arm after passing around a bottom portion of the second turning structure.

The telescopic device with single cylinder and multiple section arms, as provided in the present invention, comprises but is not limited to the following beneficial effects compared with the prior art:

The first section arm is the basic arm which is generally stationary in operation. When the telescopic mechanism performs extending or retracting, the movable end of the telescopic mechanism is moved with respect to the first section arm. The second section arm is connected with the movable end of the telescopic mechanism such that when the telescopic mechanism performs extending or retracting, the second section arm is caused to extend or retract. When the telescopic mechanism extends for 1S (wherein S is a standard length), the second section arm extends for 1S, the first turning structure extends for 1S with respect to the first section arm, and with the effect of the third extension rope, the third section arm is caused to extend for 2S with respect to the first section arm, that is, the third section arm extends for 1S with respect to the second section arm, synchronous extension of the three section arms is achieved with a single cylinder, and the relative extension amount of adjacent two section arms is same. When the telescopic mechanism retracts for 1S, the second section arm retracts for 1S, the second turning structure retracts for 1S with respect to the first section arm, and with the effect of the third retraction rope, the third section arm is caused to retract for 2S with respect to the first section arm, that is, the third section arm retracts for 1S with respect to the second section arm, synchronous retraction of the three section arms is achieved with a single cylinder, and the relative retraction amount of adjacent two section arms is same, thus the operation efficiency is improved.

Further, the telescopic mechanism is a telescopic cylinder, a cylinder body of the telescopic cylinder is disposed upward, wherein a piston rod of the telescopic cylinder is the fixed end of the telescopic mechanism and the cylinder body of the telescopic cylinder is the movable end of the telescopic mechanism.

Further, a bottom end of the piston rod of the telescopic cylinder is connected with an arm rear of the first section arm, a bottom end of the cylinder body of the telescopic cylinder is connected with an arm rear of the second section arm, the first turning structure is disposed at a top end of the cylinder body of the telescopic cylinder, the second turning structure is disposed at the arm rear of the second section arm, the third extension rope has one end connected with the arm rear of the first section arm and the other end connected with an arm rear of the third section arm, the third retraction rope has one end connected with an arm head the first section arm and the other end connected with the arm rear of the third section arm.

Further, the telescopic device with single cylinder and multiple section arms further comprises a fourth extension rope, a fourth retraction rope, and a fourth section arm nested within the third section arm, the third section arm is provided at its arm head with a third turning structure, the fourth section arm is provided at its arm rear with a fourth turning structure, the fourth extension rope has one end connected with the arm rear of the first section arm and the other end connected with an arm head of the third section arm after passing around the third turning structure and the fourth turning structure in sequence, the third section arm is provide at its arm rear with a fifth turning structure, the fourth retraction rope has one end connected with the arm rear of the fourth section arm and the other end connected with an end of the telescopic cylinder far away from the arm rear of the first section arm after passing around the fifth turning structure.

Further, the third turning structure, the fourth turning structure and the fifth turning structure are pulleys.

According to the invention, the telescopic device with single cylinder and multiple section arms further comprises a fourth extension rope, a fourth retraction rope, a fifth extension rope as well as a fourth section arm and a fifth section arm which are nested in sequence within the third section arm, the third section arm is provided at its arm head with a third turning structure, the fourth section arm is provided at its arm rear with a fourth turning structure, the fourth extension rope has one end connected with the arm rear of the first section arm and the other end connected with an arm head of the third section arm after passing around the third turning structure and the fourth turning structure in sequence, the third section arm is provided at its arm rear with a fifth turning structure;
the telescopic cylinder is provided, at its end far away from the arm rear of the first section arm, with a sixth turning structure, the fourth section arm is provided at its arm head with a seventh turning structure, the fifth section arm is provided at its arm rear with an eighth turning structure, the fifth extension rope has one end connected with the arm rear of the second section arm and the other end connected with the arm head of the fourth section arm after passing around the seventh turning structure and the eighth turning structure in sequence;
the fourth retraction rope has one end connected with the arm rear of the fifth section arm and the other end connected with the arm rear of the third section arm after passing around the fifth turning structure and the sixth turning structure in sequence.

Further, the third turning structure, the fourth turning structure, the fifth turning structure, the sixth turning structure, the seventh turning structure and the eighth turning structure are pulleys.

Further, the arm rear of either of the second section arm and the third section arm is provided with a rope hole.

In addition, a crane arm is provided in the present invention, comprising the telescopic device with single cylinder and multiple section arms as described above.

As the technical improvement and technical effect of the crane arm are same as those of the telescopic device with single cylinder and multiple section arms, the crane arm will not be explained in detail any more.

Moreover, a crane is provided in the present invention, comprising the crane arm as described above.

As the technical improvement and technical effect of the crane are same as those of the crane arm, the crane will not be explained in detail any more.

### DESCRIPTION OF THE DRAWINGS

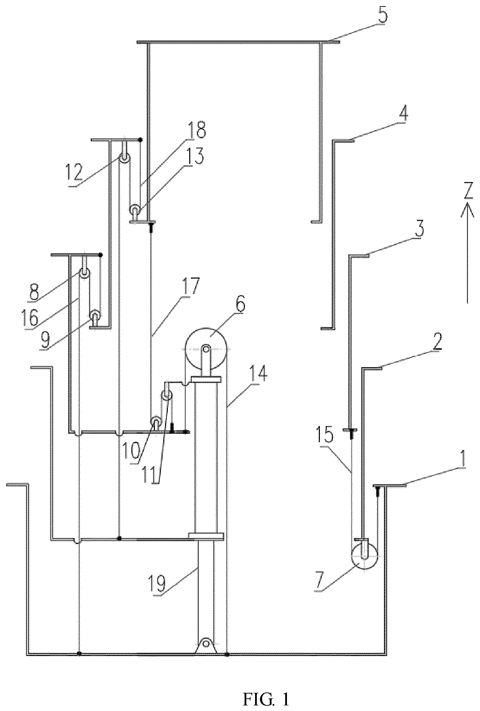

FIG 1 is a structural diagram of a telescopic device with single cylinder and multiple section arms of an embodiment of the present invention.

### List of reference numerals:

1-first section arm;2-second section arm;3-third section arm;4-fourth section arm;5-fifth section arm;6-first turning structure;7-second turning structure;8-third turning structure;9-fourth turning structure;10-fifth turning structure;11-sixth turning structure;12-seventh turning structure;13-eighth turning structure;14-third extension rope;15-third retraction rope;16-fourth extension rope;17-fourth retraction rope;18-fifth extension rope;19-telescopic mechanism.

### DESCRIPTION OF EXEMPLARY EMBODIMENTS

In order to make the above purposes, features and advantages of the present invention clearer and more understandable, the specific embodiments of the present invention will be explained in detail hereinafter in combination with the accompanying drawings.

In the description of the present invention, it should be understood that such terms as "upper" and "lower" indicate the azimuth or position relation based on the illustration as shown in the figures. They are mentioned only to facilitate describing the present invention and simplifying the description, rather than indicating or implying that the indicated device or element must have a certain azimuth, be configured in a certain azimuth and thus operate, and therefore can not be understood as limitation to the present invention.

Moreover, the Z axis in the figures represents a vertical direction, showing upper and lower positions, with the positive direction of the Z axis (i.e. the direction indicated by the arrow of the Z axis) representing "upper" and the negative direction of the Z axis (i.e. the direction opposite to the positive direction of the Z axis) representing "lower".

Also, it should be noted that the meaning of the Z axis as described above is only to facilitate describing the present invention and simplifying the description, rather than indicating or implying that the indicated device or element must have a certain azimuth, be configured in a certain azimuth and thus operate, and therefore can not be understood as limitation to the present invention.

As shown in figure 1, a telescopic device with single cylinder and multiple section arms of an embodiment of the present invention comprises: a third extension rope 14, a third retraction rope 15, a telescopic mechanism 19, a first section arm 1, as well as a second section arm 2 and a third section arm 3 that are nested in sequence within the first section arm 1, the telescopic mechanism 19 has a fixed end connected with the first section arm 1 and a movable end provided with a first turning structure 6, the second section arm 2 is connected with the movable end of the telescopic mechanism 19 and is further provided with a second turning structure 7, the third extension rope 14 has one end connected with the first section arm 1 and the other end connected with the third section arm 3 after passing around a top portion of the first turning structure 6, the third retraction rope 15 has one end connected with the first section arm 1 and the other end connected with the third section arm 3 after passing around a bottom portion of the second turning structure 7.

In the present embodiment, the first section arm 1 is the basic arm which is generally stationary in operation. The telescopic mechanism 19 has one end connected with the arm rear of the first section arm 1, and when the telescopic mechanism 19 performs extending or retracting, the movable end of the telescopic mechanism 19 is moved with respect to the first section arm 1. The second section arm 2 is connected with the movable end of the telescopic mechanism 19 such that when the telescopic mechanism 19 performs extending or retracting, the second section arm 2 is caused to extend or retract. When the telescopic mechanism 19 extends for 1S (the first turning structure 6 moves upward for 1S) (wherein S is a standard length), the second section arm 2 extends for 1S, the first turning structure 6 extends for 1S with respect to the first section arm 1, and under the action of the third extension rope 14, the third section arm 3 is caused to extend for 2S with respect to the first section arm 1, that is, the third section arm 3 extends for 1S with respect to the second section arm 2, synchronous extension of the three section arms is achieved with a single cylinder, and the relative extension amount of adjacent two section arms is same. When the telescopic mechanism 19 retracts for 1S, the second section arm 2 retracts for 1S, the second turning structure 7 retracts for 1S with respect to the first section arm 1, and with the effect of the third retraction rope 15, the third section arm 3 is caused to retract for 2S with respect to the first section arm 1, that is, the third section arm 3 retracts for 1S with respect to the second section arm 2, synchronous retraction of the three section arms with a single cylinder is achieved, and the relative retraction amount of adjacent two section arms is same, thus the operation efficiency is improved.

Optionally, referring to figure 1, the telescopic mechanism 19 is a telescopic cylinder, a cylinder body of the telescopic cylinder is disposed upward, wherein a piston rod of the telescopic cylinder is the fixed end of the telescopic mechanism 19 and the cylinder body of the telescopic cylinder is the movable end of the telescopic mechanism 19.

Herein, referring to figure 1, the rod head of the telescopic cylinder is the outer end of the piston rod, i.e. the bottom end of the piston rod, and the end of the cylinder body of the telescopic cylinder adjacent to the rod head is the bottom end of the cylinder body. Thus, as long as the arm rear of the second section arm 2 is connected with the bottom end of the cylinder body, and the bottom end of the cylinder body is lowered to the bottom end of the piston rod, the arm rear of the second section arm can be overlapped with the first section arm in the maximum degree, so the maximum range of extending and retracting of the second section arm 2 can be achieved.

In this case, the telescopic cylinder may be an oil cylinder. When a rodless cavity of the cylinder body is filled with oil, the telescopic cylinder is extended, and when a rod cavity of the cylinder body is filled with oil, the telescopic cylinder is retracted.

It should be noted that the cylinder body of the telescopic cylinder is not limited to be disposed upward, the cylinder body may be disposed downward. When the cylinder body is a downward one, the cylinder body of the telescopic cylinder is the fixed end of the telescopic mechanism 19, and the piston rod of the telescopic cylinder is the movable end of the telescopic mechanism 19.

Optionally, the first turning structure 6 and the second turning structure 7 are pulleys.

Herein, the first turning structure 6 and the second turning structure 7 are pulleys, thus reducing friction force during movement of the respective ropes, increasing service lives of the third extension rope 14 and the third retraction rope 15, and also lowering the load of the telescopic cylinder.

Optionally, a bottom end of the piston rod of the telescopic cylinder is connected with an arm rear of the first section arm 1, a bottom end of the cylinder body of the telescopic cylinder is connected with an arm rear of the second section arm 2, the first turning structure 6 is disposed at a top end of the cylinder body of the telescopic cylinder, the second turning structure 7 is disposed at the arm rear of the second section arm 2, the third extension rope 14 has one end connected with the arm rear of the first section arm 1 and the other end connected with an arm rear of the third section arm 3, the third retraction rope 15 has one end connected with an arm head the first section arm 1 and the other end connected with the arm rear of the third section arm 3.

In this case, the arm rear refers to the end of the respective section arm at the negative portion of the Z axis, i.e. the bottom end of the section arm, while the arm head refers to the end of the respective section arm at the positive portion of the Z axis, i.e. the top end of the section arm.

Herein, by setting the first turning structure 6 at the top end of the cylinder body of the telescopic cylinder and the second turning structure 7 at the arm rear of the second section arm 2, the ends of the ropes are connected to the arm rear(s) or arm head(s) of the respective section arms, and the bottom end of the cylinder body of the telescopic cylinder is connected with the arm rear of the second section arm 2. It can be ensured that when the section arms retract, the arm heads can be substantially overlapped with each other and the arm rears can be substantially overlapped with each other. It can be ensured that when the section arms extend, the arm rear thereof can be substantially overlapped with the arm head of the adjacent section arm. It can be further ensured that the section arm has a length as long as possible in extending and a length as short as possible in retracting.

Optionally, referring to figure 1, the telescopic device with single cylinder and multiple section arms further comprises: a fourth extension rope 16, a fourth retraction rope 17, and a fourth section arm 4 nested within the third section arm 3, the third section arm 3 is provided at its arm head with a third turning structure 8, the fourth section arm 4 is provided at its arm rear with a fourth turning structure 9, the fourth extension rope 16 has one end connected with the arm rear of the first section arm 1 and the other end connected with an arm head of the third section arm 3 after passing around the third turning structure 8 and the fourth turning structure 9 in sequence, the third section arm 3 is provide at its arm rear with a fifth turning structure 10, the fourth retraction rope 17 has one end connected with the arm rear of the fourth section arm 4 and the other end connected with an end of the telescopic cylinder far away from the arm rear of the first section arm 1 after passing around the fifth turning structure 10.

Herein, as described above, when the telescopic cylinder extends for 1S, the second section arm 2 extends for 1S, the first turning structure 6 extends for 1S with respect to the first section arm 1, and with the effect of the third extension rope 14, the third section arm 3 is caused to extend for 2S with respect to the first section arm 1, that is, the third section arm 3 extends for 1S with respect to the second section arm 2. As the third section arm 3 extends for 2S with respect to the first section arm 1, and with the effects of the third turning structure 8, the fourth turning structure 9 and the fourth extension rope 16, the fourth section arm 4 is pulled to extend for 3S with respect to the first section arm 1, that is, the fourth section arm 4 is pulled to extend for 1S with respect to the third section arm 3, synchronous extension of the four section arms is achieved with a single cylinder, and the relative extension amount of adjacent two section arms is same. When the telescopic cylinder retracts for 1S, the second section arm 2 retracts for 1S, the second turning structure 7 retracts for 1S with respect to the first section arm 1, and with the effect of the third retraction rope 15, the third section arm 3 is caused to retract for 2S with respect to the first section arm 1, that is, the third section arm 3 retracts for 1S with respect to the second section arm 2. As the third section arm 3 retracts for 2S with respect to the first section arm 1, and by pulling with the fifth turning structure 10 and the fourth retraction rope 17, the fourth section arm 4 is caused to retract for 3S with respect to the first section arm 1, synchronous retraction of the four section arms is achieved with a single cylinder, and the relative retraction amount of adjacent two section arms is same.

Optionally, the third turning structure 8, the fourth turning structure 9 and the fifth turning structure 10 are pulleys.

Herein, as described above, the third turning structure 8, the fourth turning structure 9 and the fifth turning structure 10 are pulleys, thus reducing friction force during movement of the respective ropes, increasing service lives of the fourth extension rope 16 and the fourth retraction rope 17, and also lowering the load of the telescopic cylinder.

Optionally, referring to figure 1, the telescopic device with single cylinder and multiple section arms further comprises a fourth extension rope 16, a fourth retraction rope 17, a fifth extension rope 18 as well as a fourth section arm 4 and a fifth section arm 5 which are nested in sequence within the third section arm 3, the third section arm 3 is provided at its arm head with a third turning structure 8, the fourth section arm 4 is provided at its arm rear with a fourth turning structure 9, the fourth extension rope 16 has one end connected with the arm rear of the first section arm 1 and the other end connected with an arm head of the third section arm 3 after passing around the third turning structure 8 and the fourth turning structure 9 in sequence, the third section arm 3 is provided at its arm rear with a fifth turning structure 10.

The telescopic cylinder is provided, at its end far away from the arm rear of the first section arm 1, with a sixth turning structure 11, the fourth section arm 4 is provided at its arm head with a seventh turning structure 12, the fifth section arm 5 is provided at its arm rear with an eighth turning structure 13, the fifth extension rope 18 has one end connected with the arm rear of the second section arm 2 and the other end connected with the arm head of the fourth section arm 4 after passing around the seventh turning structure 12 and the eighth turning structure 13 in sequence.

The fourth retraction rope 17 has one end connected with the arm rear of the fifth section arm 5 and the other end connected with the arm rear of the third section arm 3 after passing around the fifth turning structure 10 and the sixth turning structure 11 in sequence.

Herein, if the fifth section arm 5 is provided, in addition to the fifth turning structure 10 cooperating with the fourth retraction rope 17, the sixth turning structure 11 is further provided. The sixth turning structure 11 is fixed to the top end of the telescopic cylinder. The fourth retraction rope 17 has one end connected with the arm rear of the fifth section arm 5 and the other end connected with the arm rear of the third section arm 3 after passing around the fifth turning structure 10 and the sixth turning structure 11 in sequence. Thus, when the third section arm 3 extends for 2S with respect to the first section arm 1, with the effects of the third turning structure 8, the fourth turning structure 9 and the fourth extension rope 16, the fourth section arm 4 is pulled to extend for 3S with respect to the first section arm 1, and when the fourth section arm 4 extends for 3S with respect to the first section arm 1, with the effects of the seventh turning structure 12, the eighth turning structure 13 and the fifth extension rope 18, the fifth section arm 5 is caused to extend for 4S with respect to the first section arm 1, that is, the fifth section arm 5 is caused to extend for 1S with respect to the fourth section arm 4, synchronous extension of the five section arms is achieved with a single cylinder, and the relative extension amount of adjacent two section arms is same. When the third section arm 3 retracts for 2S with respect to the first section arm 1, with the effects of the fifth turning structure 10, the sixth turning structure 11 and the fourth retraction rope 17, the fifth section arm 5 is caused to retract for 4S with respect to the first section arm 1, and as the fifth section arm 5 retracts for 4S with respect to the first section arm 1, with the effects of the seventh turning structure 12, the eighth turning structure 13 and the fifth extension rope 18, the fourth section arm 4 is caused to retract for 3S with respect to the first section arm 1, achieving synchronous retraction of the five section arms with a single cylinder.

In addition, when the fourth section arm 4 performs extending, the pulling force directly on the fourth section arm 4 comes from the fourth extension rope 16 extending along both sides of the fourth turning mechanism. In contrast to the case in which the end of the fourth extension rope 16 far away from the first section arm 1 is directly connected with the arm rear of the fourth section arm 4, in the present embodiment, with the presence of the fourth turning structure 9, the load on the fourth extension rope 16 is smaller, while ensuring that the extension amount of the fourth section arm 4 with respect to the third section arm 3 is consistent with that of the telescopic cylinder. When the fifth section arm 5 performs extending, the pulling force directly on the fifth section arm 5 comes from the fifth extension rope 18 extending along both sides of the eighth turning structure 13. In contrast to the case in which the end of the fifth extension rope 18 far away from the second section arm 2 is directly connected with the arm rear of the fifth section arm 5, in the present embodiment, with the presence of the eighth turning structure 13, the load on the fifth extension rope 18 is smaller, while ensuring that the extension amount of the fifth section arm 5 with respect to the fourth section arm 4 is consistent with that of the telescopic cylinder.

Optionally, the third turning structure 8, the fourth turning structure 9, the fifth turning structure 10, the sixth turning structure 11, seventh turning structure 12 and the eighth turning structure 13 are pulleys.

Herein, all turning structures are pulleys, thus reducing friction force during movement of the respective ropes, increasing service lives of the ropes, and also lowering the load of the telescopic cylinder.

Optionally, the arm rear of either of the second section arm 2 and the third section arm 3 is provided with a rope hole. The rope holes are provided for the respective ropes to pass through, avoiding an overlong path of the rope(s).

Further, in another embodiment of the present invention, a crane arm comprises the telescopic device with single cylinder and multiple section arms as described above.

As the technical improvement and technical effect of the crane arm are same as those of the telescopic device with single cylinder and multiple section arms, the crane arm will not be explained in detail any more.

Furthermore, in another embodiment of the present invention, a crane comprises the crane arm as described above.

As the technical improvement and technical effect of the crane are same as those of the crane arm, the crane will not be explained in detail any more.

The terms of "first" and "second" are used for purpose of description only, and can not be understood as indicating or implying relative importance or implicitly showing the number of the indicated technical feature(s). Therefore, the features defined with "first" and "second" may explicitly or implicitly comprise at least one such feature.

## Claims

1. A telescopic device with single cylinder and multiple section arms, comprising: a third extension rope (14), a third retraction rope (15), a telescopic mechanism (19), a first section arm (1), as well as a second section arm (2) and a third section arm (3) that are nested in sequence within the first section arm (1), the telescopic mechanism (19) has a fixed end connected with the first section arm (1) and a movable end provided with a first turning structure (6), the second section arm (2) is connected with the movable end of the telescopic mechanism (19) and is further provided with a second turning structure (7), the third extension rope (14) has one end connected with the first section arm (1) and the other end connected with the third section arm (3) after passing around a top portion of the first turning structure (6), the third retraction rope (15) has one end connected with the first section arm (1) and the other end connected with the third section arm (3) after passing around a bottom portion of the second turning structure (7), wherein the telescopic mechanism (19) is a telescopic cylinder, a cylinder body of the telescopic cylinder is disposed upward, wherein a piston rod of the telescopic cylinder is the fixed end of the telescopic mechanism (19) and the cylinder body of the telescopic cylinder is the movable end of the telescopic mechanism (19), wherein the telescopic device further comprises: a fourth extension rope (16), a fourth retraction rope (17), a fifth extension rope (18) as well as a fourth section arm (4) and a fifth section arm (5) that are nested in sequence within the third section arm (3), the third section arm (3) is provided at its arm head with a third turning structure (8), the fourth section arm (4) is provided at its arm rear with a fourth turning structure (9), and the third section arm (3) is provided at its arm rear with a fifth turning structure (10); the fourth section arm (4) is provided at its arm head with a seventh turning structure (12), **characterized in that** the fourth extension rope (16) has one end connected with the arm rear of the first section arm (1) and the other end connected with an arm head of the third section arm (3) after passing around the third turning structure (8) and the fourth turning structure (9) in sequence, the telescopic cylinder is provided, at its end far away from the arm rear of the first section arm (1), with a sixth turning structure (11), the fifth section arm (5) is provided at its arm rear with an eighth turning structure (13), the fifth extension rope (18) has one end connected with the arm rear of the second section arm (2) and the other end connected with the arm head of the fourth section arm (4) after passing around the seventh turning structure (12) and the eighth turning structure (13) in sequence; and the fourth retraction rope (17) has one end connected with the arm rear of the fifth section arm (5) and the other end connected with the arm rear of the third section arm (3) after passing around the fifth turning structure (10) and the sixth turning structure (11) in sequence.

2. The telescopic device with single cylinder and multiple section arms according to claim 1, wherein a bottom end of the piston rod of the telescopic cylinder is connected with an arm rear of the first section arm (1), a bottom end of the cylinder body of the telescopic cylinder is connected with an arm rear of the second section arm (2), the first turning structure (6) is disposed at a top end of the cylinder body of the telescopic cylinder, the second turning structure is disposed at the arm rear of the second section arm (2), the third extension rope (14) has one end connected with the arm rear of the first section arm (1) and the other end connected with an arm rear of the third section arm (3), the third retraction rope (15) has one end connected with an arm head the first section arm (1) and the other end connected with the arm rear of the third section arm (3).

3. The telescopic device with single cylinder and multiple section arms according to claim 1, wherein the third turning structure (8), the fourth turning structure (9), the fifth turning structure (10), the sixth turning structure (11), the seventh turning structure (12) and the eighth turning structure (13) are pulleys.

4. The telescopic device with single cylinder and multiple section arms according to claim 1, wherein the arm rear of each of the second section arm (2) and the third section arm (3) is provided with a rope hole.

5. A crane arm, comprising the telescopic device with single cylinder and multiple section arms according to any one of claims 1 to 4.

6. A crane, comprising the crane arm according to claim 5.

## Patentansprüche

1. Eine Teleskopvorrichtung mit Einzelzylinder und mehreren Teilarmen, beinhaltend: ein drittes Ausziehseil (14), ein drittes Einziehseil (15), einen Teleskopmechanismus (19), einen ersten Teilarm (1) sowie einen zweiten Teilarm (2) und einen dritten Teilarm (3), die der Reihe nach innerhalb des ersten Teilarms (1) verschachtelt sind, wobei der Teleskopmechanismus (19) ein festes Ende, das mit dem ersten Teilarm (1) verbunden ist, und ein bewegbares Ende, das mit einer ersten Drehstruktur (6) versehen ist, aufweist, wobei der zweite Teilarm (2) mit dem bewegbaren Ende des Teleskopmechanismus (19) verbunden ist und ferner mit einer zweiten Drehstruktur (7) versehen ist, wobei das dritte Ausziehseil (14) ein Ende mit dem ersten Teilarm (1) verbunden und das andere Ende mit dem dritten Teilarm (3) verbunden aufweist, nachdem es um einen oberen Abschnitt der ersten Drehstruktur (6) geführt wurde, wobei das dritte Einziehseil (15) ein Ende mit dem ersten Teilarm (1) verbunden und das andere Ende mit dem dritten Teilarm (3) verbunden aufweist, nachdem es um einen unteren Abschnitt der zweiten Drehstruktur (7) geführt wurde, wobei der Teleskopmechanismus (19) ein Teleskopzylinder ist, wobei ein Zylinderkörper des Teleskopzylinders aufwärts angeordnet ist, wobei eine Kolbenstange des Teleskopzylinders das feste Ende des Teleskopmechanismus (19) ist und der Zylinderkörper des Teleskopzylinders das bewegbare Ende des Teleskopmechanismus (19) ist,
wobei die Teleskopvorrichtung ferner Folgendes beinhaltet: ein viertes Ausziehseil (16), ein viertes Einziehseil (17), ein fünftes Ausziehseil (18) sowie einen vierten Teilarm (4) und einen fünften Teilarm (5), die der Reihe nach innerhalb des dritten Teilarms (3) verschachtelt sind, wobei der dritte Teilarm (3) an seinem Armkopf mit einer dritten Drehstruktur (8) versehen ist, der vierte Teilarm (4) an seiner Armrückseite mit einer vierten Drehstruktur (9) versehen ist und der dritte Teilarm (3) an seiner Armrückseite mit einer fünften Drehstruktur (10) versehen ist; wobei der vierte Teilarm (4) an seinem Armkopf mit einer siebten Drehstruktur (12) versehen ist, **dadurch gekennzeichnet, dass** das vierte Ausziehseil (16) ein Ende mit der Armrückseite des ersten Teilarms (1) verbunden und das andere Ende mit einem Armkopf des dritten Teilarms (3) verbunden aufweist, nachdem es der Reihe nach um die dritte Drehstruktur (8) und die vierte Drehstruktur (9) geführt wurde, wobei der Teleskopzylinder an seinem von der Armrückseite des ersten Teilarms (1) weit entfernten Ende mit einer sechsten Drehstruktur (11) versehen ist, wobei der fünfte Teilarm (5) an seiner Armrückseite mit einer achten Drehstruktur (13) versehen ist, wobei das fünfte Ausziehseil (18) ein Ende mit der Armrückseite des zweiten Teilarms (2) verbunden und das andere Ende mit dem Armkopf des vierten Teilarms (4) aufweist, nachdem es der Reihe nach um die siebte Drehstruktur (12) und die achte Drehstruktur (13) geführt wurde; und wobei das vierte Einziehseil (17) ein Ende mit der Armrückseite des fünften Teilarms (5) verbunden und das andere Ende mit der Armrückseite des dritten Teilarms (3) verbunden aufweist, nachdem es der Reihe nach um die fünfte Drehstruktur (10) und die sechste Drehstruktur (11) geführt wurde.

2. Teleskopvorrichtung mit Einzelzylinder und mehreren Teilarmen gemäß Anspruch 1, wobei ein unteres Ende der Kolbenstange des Teleskopzylinders mit einer Armrückseite des ersten Teilarms (1) verbunden ist, ein unteres Ende des Zylinderkörpers des Teleskopzylinders mit einer Armrückseite des zweiten Teilarms (2) verbunden ist, die erste Drehstruktur (6) an einem oberen Ende des Zylinderkörpers des Teleskopzylinders angeordnet ist, die zweite Drehstruktur an der Armrückseite des zweiten Teilarms (2) angeordnet ist, wobei das dritte Ausziehseil (14) ein Ende mit der Armrückseite des ersten Teilarms (1) verbunden und das andere Ende mit einer Armrückseite des dritten Teilarms (3) verbunden aufweist, wobei das dritte Einziehseil (15) ein Ende mit dem Armkopf des ersten Teilarms (1) verbunden und das andere Ende mit der Armrückseite des dritten Teilarms (3) verbunden aufweist.

3. Teleskopvorrichtung mit Einzelzylinder und mehreren Teilarmen gemäß Anspruch 1,
wobei die dritte Drehstruktur (8), die vierte Drehstruktur (9), die fünfte Drehstruktur (10), die sechste Drehstruktur (11), die siebte Drehstruktur (12) und die achte Drehstruktur (13) Seilrollen sind.

4. Teleskopvorrichtung mit Einzelzylinder und mehreren Teilarmen gemäß Anspruch 1,
wobei die Armrückseite von dem zweiten Teilarm (2) und dem dritten Teilarm (3) jeweils mit einem Seilloch versehen ist.

5. Ein Kranarm, der die Teleskopvorrichtung mit Einzelzylinder und mehreren Teilarmen gemäß einem der Ansprüche 1 bis 4 beinhaltet.

6. Ein Kran, der den Kranarm gemäß Anspruch 5 beinhaltet.

## Revendications

1. Un dispositif télescopique à un seul cylindre et bras de section multiples, comprenant :
un troisième câble d'extension (14), un troisième câble de rétraction (15), un mécanisme télescopique (19), un premier bras de section (1), ainsi qu'un deuxième bras de section (2) et un troisième bras de section (3) qui sont emboîtés en séquence au sein du premier bras de section (1), le mécanisme télescopique (19) ayant une extrémité fixe reliée au premier bras de section (1) et une extrémité mobile pourvue d'une première structure tournante (6), le deuxième bras de section (2) étant relié à l'extrémité mobile du mécanisme télescopique (19) et étant en outre pourvu d'une deuxième structure tournante (7), le troisième câble d'extension (14) ayant une extrémité reliée au premier bras de section (1) et l'autre extrémité reliée au troisième bras de section (3) après être passée autour d'une portion supérieure de la première structure tournante (6), le troisième câble de rétraction (15) ayant une extrémité reliée au premier bras de section (1) et l'autre extrémité reliée au troisième bras de section (3) après être passée autour d'une portion inférieure de la deuxième structure tournante (7), où le mécanisme télescopique (19) est un cylindre télescopique, un corps de cylindre du cylindre télescopique étant disposé vers le haut, où une tige de piston du cylindre télescopique est l'extrémité fixe du mécanisme télescopique (19) et le corps de cylindre du cylindre télescopique est l'extrémité mobile du mécanisme télescopique (19),
où le dispositif télescopique comprend en outre : un quatrième câble d'extension (16), un quatrième câble de rétraction (17), un cinquième câble d'extension (18) ainsi qu'un quatrième bras de section (4) et un cinquième bras de section (5) qui sont emboîtés en séquence au sein du troisième bras de section (3), le troisième bras de section (3) étant pourvu au niveau de sa tête de bras d'une troisième structure tournante (8), le quatrième bras de section (4) étant pourvu au niveau de son arrière de bras d'une quatrième structure tournante (9), et le troisième bras de section (3) étant pourvu au niveau de son arrière de bras d'une cinquième structure tournante (10) ; le quatrième bras de section (4) étant pourvu au niveau de sa tête de bras d'une septième structure tournante (12), **caractérisé en ce que** le quatrième câble d'extension (16) a une extrémité reliée à l'arrière de bras du premier bras de section (1) et l'autre extrémité reliée à une tête de bras du troisième bras de section (3) après être passée autour de la troisième structure tournante (8) et de la quatrième structure tournante (9) en séquence, le cylindre télescopique étant pourvu, au niveau de son extrémité éloignée de l'arrière de bras du premier bras de section (1), d'une sixième structure tournante (11), le cinquième bras de section (5) étant pourvu au niveau de son arrière de bras d'une huitième structure tournante (13), le cinquième câble d'extension (18) ayant une extrémité reliée à l'arrière de bras du deuxième bras de section (2) et l'autre extrémité reliée à la tête de bras du quatrième bras de section (4) après être passée autour de la septième structure tournante (12) et de la huitième structure tournante (13) en séquence ; et le quatrième câble de rétraction (17) ayant une extrémité reliée à l'arrière de bras du cinquième bras de section (5) et l'autre extrémité reliée à l'arrière de bras du troisième bras de section (3) après être passée autour de la cinquième structure tournante (10) et de la sixième structure tournante (11) en séquence.

2. Le dispositif télescopique à un seul cylindre et bras de section multiples selon la revendication 1, où une extrémité inférieure de la tige de piston du cylindre télescopique est reliée à un arrière de bras du premier bras de section (1), une extrémité inférieure du corps de cylindre du cylindre télescopique est reliée à un arrière de bras du deuxième bras de section (2), la première structure tournante (6) est disposée au niveau d'une extrémité supérieure du corps de cylindre du cylindre télescopique, la deuxième structure tournante est disposée au niveau de l'arrière de bras du deuxième bras de section (2), le troisième câble d'extension (14) a une extrémité reliée à l'arrière de bras du premier bras de section (1) et l'autre extrémité reliée à un arrière de bras du troisième bras de section (3), le troisième câble de rétraction (15) a une extrémité reliée à une tête de bras du premier bras de section (1) et l'autre extrémité reliée à l'arrière de bras du troisième bras de section (3).

3. Le dispositif télescopique à un seul cylindre et bras de section multiples selon la revendication 1, où la troisième structure tournante (8), la quatrième structure tournante (9), la cinquième structure tournante (10), la sixième structure tournante (11), la septième structure tournante (12) et la huitième structure tournante (13) sont des poulies.

4. Le dispositif télescopique à un seul cylindre et bras de section multiples selon la revendication 1, où l'arrière de bras de chaque bras parmi le deuxième bras de section (2) et le troisième bras de section (3) est pourvu d'un trou pour câble.

5. Un bras de grue, comprenant le dispositif télescopique à un seul cylindre et bras de section multiples selon l'une quelconque des revendications 1 à 4.

6. Une grue, comprenant le bras de grue selon la revendication 5.
